# EUROPEAN PATENT APPLICATION

(11) **EP 2 193 719 A1**
(43) Date of publication of application: **09.06.2010**
(21) Application number: 07829069.9
(22) Date of filing: 26.09.2007
(51) Int. Cl.: A21D 15/02

(54) **LEAN BREAD COOLING METHOD AND APPARATUS**

(71) Applicant: Mayekawa Mfg. Co., Ltd., Tokyo 135-0046 (JP)
(72) Inventor: KITAMURA, Kazushige, Tokyo 135-8482 (JP); OTA, Toru, Tokyo 135-8482 (JP)
(74) Representative: Collin, Jérôme
(86) International application number: PCT/JP2007/069330
(87) International publication number: WO 2009/040958

(57) **Abstract**

A lean bread cooling method and apparatus with which even when the lean bread is one of low fat content, there can be attained minimizing of water evaporation during cooling, prevention of peeling after reheating of frozen lean bread and maintaining of appropriate surface condition. There is provided a method of cooling for a lean bread subjected to cooling before freezing after burning, comprising the humidification cooling step of carrying out humidification cooling of the lean bread after burning in an atmosphere of 35 to 45°C temperature and 90 to 98% relative humidity, wherein the core temperature of the lean bread immediately before the humidification cooling step is in the range of 90 to 95°C.

## Description

### Technical Field

This invention relates to a method of freeze storing baked foods such as baked bread and baked confectionery in a humidified atmosphere and apparatus thereof.

### Description of the Related Art

In order to reduce the cost of making and distributing bread, distributors and bakeries recently adopted a method to freeze-store baked bread in a storage of low temperature by introducing cooling air and cook the frozen bread for thawing so as to restore to a fresh baked state and sell the bread.

For example, lean bread is often processed for sandwiches with ingredients inside. Half-baked lean bread is transferred to a kitchen in a frozen state, being thawed and cooked for secondary-bake so as to make a freshly-baked sandwich which can be prepared as needed and stored for a longer period of time. The half-baked bread can also be purchased and baked at home for secondary-bake prior to eating so as to prepare a freshly baked bread at home. Storing baked bread has a lot of benefits. Herein, lean bread refers to baked bread made from lean dough which has not more than 10% by weight of salt, sugar, dairy, fat in total weight to 100wt% of cereal flour.

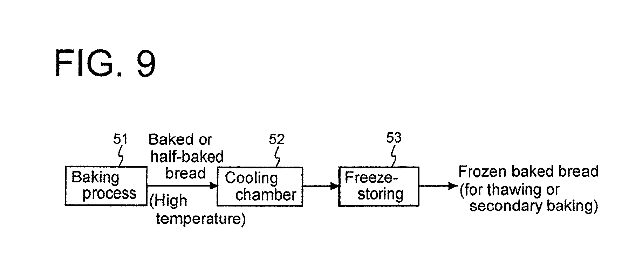

Conventionally, baked bread is stored frozen in the manner shown in the block diagram of FIG. 9. In FIG. 9, bread is baked in a baking process 51, and the baked bread whose surface temperature is 85°C and above is cooled to make the surface temperature approximately 1 to 3°C in a cooling chamber 52 whose temperature is maintained at -5°C and below. In a freeze-storing process 53, the cooled bread is frozen at about -20°C and 50 to 70%RH and prepared for the storing.

Another related art discloses a method for freeze-storing bread in which bread is carried in on a conveyor through a cooling chamber from an entrance to an exit thereof and through a freezing chamber from an entrance to an exit thereof. The conveyor carries bread thereon at a constant speed through the cooling chamber and freezing chamber in which bread is cooled and then frozen. According to this method, the bread is cooled in the cooling chamber in which humidified air premixed with spray water is supplied to the exit side and freeze-stored in the freezing chamber in which temperature is maintained at approximately -20°C to be ready for the shipment.

However, according to the freeze-storing method shown in FIG.9, after being stored in the storage for a certain period of time, the baked bread shows staling on bread surface, drying of a crust (surface layer of the baked bread) and flaking, resulting in a weight decrease, and good texture and its commercial value are lost. When water contained in the humidified air evaporates taking evaporative latent heat from the surrounding, the ambient temperature decreases at the exit side of the cooling chamber, causing a temperature difference between the entrance side and exit side, and a drop in relative humidity in the cooling chamber. This results in quality deterioration of the baked bread.

In view of the problems above, Patent Reference 1 (WO05/1074801A1) proposes a method of freeze-storing baked foods so as to retain excellent crust quality of baked food and also to prevent crust flaking. According to this method, the baked food is cooled in a highly-humidified atmosphere and then frozen. In the cooling process, the baked food is cooled in such a manner that a core temperature thereof becomes 30 to 35°C, preferably in such highly-humidified atmosphere where the temperature is 20 to 28oC and the humidity is 65% or higher.

According to Patent Reference 1, the highly-humidified atmosphere can be sustained and the cooling step can be conducted efficiently. However, in the case of cooling the lean bread hot from the oven, when the lean bread is cooled at a temperature of 20 to 28°C, moisture evaporates from the lean bread under the rapid temperature change and when reheating the lean bread frozen in the above manner, the surface layer of the lean bread tends to flake. Especially, during cooling of the bread, moisture tends to evaporate and it is difficult to sustain moisture in the bread. As a result, the surface layer of the bread is prone to flaking and the condition of the surface thereof deteriorates.

### Disclosure of the Invention

Accordingly, in a view of the problem of the related art, an object of the present invention is to provide a method and device of cooling lean bread, which minimizes water evaporation in the cooling step even in the case of lean bread which is low in fat, thereby preventing the flaking on the surface layer when re-heating frozen lean bread and sustaining the quality of the surface layer.

In order to achieve the object of the present invention, the present invention proposes a method of cooling lean bread which has been baked or half-baked, prior to freezing the lean bread, comprising:
a humidifying and cooling step of humidifying and cooling the baked or half-baked lean bread in an atmosphere of 35 to 45°C and 90 to 98%RH, preferably in an atmosphere of 40 to 45°C and 95 to 98%RH wherein a core temperature of the baked or half-baked lean bread immediately before the humidifying and cooling step is in a range of 90 to 95°C.

According to the present invention, the humidifying and cooling step is performed while the core temperature of the bread which has been baked is still high, so that the lean bread can be cooled without a drastic change of a temperature and the moisture evaporation from the lean bread, which is low in fat and prone to water evaporation, can be minimized. Thus, when reheating the lean bread, the lean bread remains in a good condition in which the surface layer is not prone to flaking.

In the present invention, it is preferable that the lean bread is subjected to the atmosphere for 30 to 45 minutes.

With this, the lean bread can be cooled to the temperature appropriate for a subsequent freezing step. According to the present invention, the lean bread is cooled in an atmosphere of a temperature higher than a room temperature, and thus cooling the bread longer than 45 minutes can deteriorate the qualities of the bread. Therefore, it is preferable that the lean bread is subjected to the atmosphere for 30 to 45 minutes.

The present invention also suggests a method of cooling lean bread which has been baked or half-baked, prior to freezing the lean bread, comprising:
a humidifying and cooling step of humidifying and cooling the baked or half-baked lean bread,
wherein the humidifying and cooling step includes substeps of:
cooling the lean bread in an first atmosphere of 35 to 55°C and 90 to 98%RH, preferably 45 to 55°C and 95 to 98%RH; and
cooling the lean bread in an second atmosphere of 10 to 25°C and 85 to 95%RH, preferably of 15 to 20°C and 85 to 90%RH,
wherein a core temperature of the baked or half-baked lean bread immediately before the humidifying and cooling step is in a range of 90 to 95°C.

According to the present invention, the humidifying and cooling step is performed while the core temperature of the bread which has been baked is still high so as to minimize the moisture evaporation from the lean bread and prevent the flaking of the surface layer when reheating the lean bread.

Moreover, the lean bread is cooled gradually in the two different atmospheres, which is effective in preventing the flaking of the surface layer when reheating the lean bread and maintains the excellent qualities of the surface.

It is also preferable that in the humidifying and cooling step, the lean bread is subjected to the first atmosphere for 20 to 45 minutes and to the second atmosphere for 25 to 40 minutes.

With this, the lean bread can be cooled to the temperature appropriate for a subsequent freezing step. According to the present invention, the lean bread is subjected to each of the atmospheres for the above-described time so as to prevent the deterioration of the lean bread.

Furthermore, the humidifying and cooling step may be terminated when a temperature difference between a core and a surface of the lean bread becomes 5°C or smaller.

When the lean bread is subjected to the above atmosphere, the temperature on the surface layer (surface temperature) drops first and then the temperature inside the bread (core temperature) drops. Once the temperature difference between the core and the surface becomes 5°C or smaller, it is determined that the bread reached a lowest temperature limit of the atmosphere. Thus, it is simply costing to conduct the humidifying and cooling step past the point, and neither effective. According to the present invention, it is possible to determine when to terminate the humidifying and cooling step and reduce the operation cost of the cooling chamber.

The present invention also provides an apparatus of cooling lean bread which has been baked, prior to freezing the lean bread, comprising:
a cooling chamber which the lean bread is brought in, the cooling chamber being sustained in an atmosphere of 35 to 45oC and 90 to 98%RH, preferably 40 to 45°C and 95 to 98%RH,
wherein a core temperature of the baked or half-baked lean bread immediately before entering the cooling chamber is in a range of 90 to 95°C.

According to the present invention, another apparatus of cooling lean bread which has been baked or half-baked, prior to freezing the lean bread, comprises:
a cooling chamber which the lean bread is brought in, the cooling chamber,
wherein the cooling chamber includes a temperature/humidifying regulator which keeps an atmosphere inside the cooling chamber at a temperature of 35 to 55°C and a humidity of 90 to 98%RH, preferably 45 to 55°C and 95 to 98%RH, and then keeps the atmosphere inside the cooling chamber at a temperature of 10 to 25°C and a humidity of 85 to 95%RH, preferably 15 to 25°C and 85 to 90%RH and
wherein a core temperature of the baked or half-baked lean bread immediately before entering the cooling chamber is in a range of 90 to 95°C.

By performing the humidifying and cooling step in one cooling chamber so as to cool the bread gradually, the cooling chamber can be downsized.

Furthermore, the present invention proposes an apparatus of cooling lean bread which has been baked or half-baked, comprising:
a conveyor which transfers the lean bread in a transferring direction; and
a cooling chamber which includes an upstream room and a downstream room arranged in the transferring direction, the lean bread being transferred by the conveyor so as to pass through the upstream and downstream rooms successively,
wherein the upstream cooling room of the cooling chamber is sustained in an atmosphere of 35 to 55°C and 95 to 98%RH, preferably 45 to 55°C and 95 to 98%RH and the downstream room of the cooling chamber is sustained in an atmosphere of 10 to 25°C and 85 to 95%RH, preferably 15 to 25°C and 85 to 90%RH, and
wherein a core temperature of the baked or half-baked lean bread immediately before entering the cooling chamber is in a range of 90 to 95°C.

By arranging the cooling chambers with different operation conditions next to each other, the lean bread can be cooled gradually in a continuous manner, resulting in higher throughput.

According to the present invention, the lean bread is first brought into the cooling chamber of the temperature higher than a room temperature, suppressing the moisture evaporation which is common in a case of the bread entering a low temperature atmosphere. In this manner, dryness near a crack can be avoided and the flaking of the surface layer of the bread after freezing or reheating, can be prevented. Especially, when the lean bread is processed for sandwiches, generation of flaking from cutting the baked bread can be avoided and the lean bread with high product value can be obtained.

### Brief Description of the Drawings

FIG.1 is a figure illustrating a first embodiment of the present invention.
FIG.2 is a figure illustrating a second embodiment of the present invention.
FIG.3 is a figure illustrating an application of the second embodiment of the present invention.
FIG.4 is a table of experimental results showing yield rate and flaking rate of the lean bread.
FIG.5 is a picture showing a flaking of the lean bread obtained in the first embodiment.
FIG.6 is a picture showing a flaking of the lean bread obtained in the second embodiment.
FIG.7 is a picture showing a flaking of the lean bread obtained in an experimental example.
FIG.8 is a picture showing a flaking of the lean bread in a comparison example.
FIG.9 is a flow chart illustrating a common process of producing baked breads.

### Detailed Description of the Invention

Hereafter, the present invention will be described in detail with reference to the embodiments shown in the figures. However, the dimensions, materials, shape, the relative placement and so on of a component described in these embodiments shall not be construed as limiting the scope of the invention thereto, unless especially specific mention is made.

### [First Embodiment]

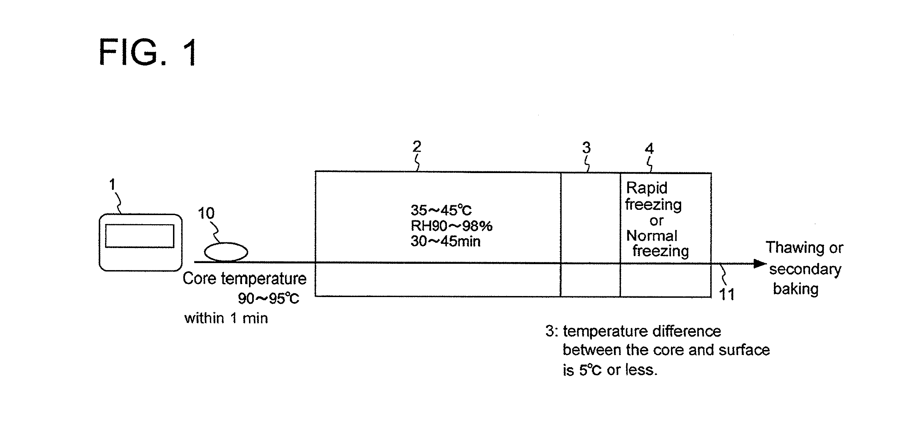

A first embodiment will be explained in reference to FIG.1. FIG.1 shows a heating appliance 1 for baking or half-baking the bread, a cooling chamber 2 which can be hermetically closed to sustain an atmosphere inside within a desirable temperature and humidity, a freezing chamber 4 which can be hermetically sealed in a similar manner as the cooling chamber 2 to maintain an atmosphere at a freezing point or below, a connection part 3 for connecting the cooling chamber 2 and the freezing chamber 4, and a lean bread 10 to be cooled in the following embodiments. Herein, lean bread refers to baked bread made from lean dough which has not more than 10% by weight of salt, sugar, dairy, fat in total weight to 100wt% of cereal flour. A lean bread is usually made from cereal flour, salt, sugar, dairy, fat, eggs, emulsifying agent, yeast, yeast food and so on. In the figure, a conveyor 11 transfers the lean bread 10 loaded thereon through the cooling chamber 2 and the freezing chamber 4. The conveyor 11 is constructed so that the speed thereof can be adjusted such that the lean bread 10 can stay in the cooling chamber 2 and the freezing chamber 4 for a desired period of time.

In the first embodiment, the lean bread 10 which has been baked or half-baked by the heating appliance 1 is loaded onto the conveyor and transferred into the cooling chamber 2. In this step, the core temperature of the lean bread 10 immediately before entering the cooling chamber is 90 to 95°C. Preferably, the lean bread should enter the cooling chamber 2 within 1 minute after being taken out from the heating appliance 1.

The transferring speed of the conveyor 11 is controlled so that the lean bread 10 stays in the cooling chamber 2 for a predetermined period of time to be cooled.

In this embodiment, the atmosphere of the cooling chamber is maintained at 35 to 45°C and 90 to 98%RH, preferably 40 to 45°C and 95 to 98%RH. The lean bread 10 is preferably subjected to the atmosphere in the cooling chamber 2 for 40 to 45 minutes or subjected to the atmosphere until a temperature difference between a core and a surface of the lean bread 10 becomes 5°C or smaller.

The lean bread 10 which has been cooled in the cooling chamber 2 is transferred into the freezing chamber 4 via the connection unit 3, where the lean bread is sustained at a freezing temperature or below. The cooling chamber and the freezing chamber 4 may be connected directly to each other without the connection unit 3.

The freezing chamber 4 may perform a normal freezing or a rapid freezing. In a case of the normal freezing, the lean bread stays in the freezing chamber 4 for 10 to 24 hours at a temperature of approximately -20°C (approximately -15 to -25°C). In this case, a freezing chamber for storing products can be used, and the lean bread is stored for the cooling duration. In a case of the rapid freezing, the lean bread stays in the freezing chamber 4 for 60 to 80 minutes at a temperature of approximately -30°C (approximately -30 to -40°C). In this embodiment, it is more preferable to adopt the rapid freezing and thus the excellent quality of the bread is maintained and the taste of the bread is enhanced.

After the freezing step, the frozen lean bread 10 is packaged and shipped to retailers.

When the frozen lean bread 10 has previously been fully baked by the heating appliance 1, the frozen lean bread needs to be thawed. However, when the frozen lean bread 10 has previously been half-baked by the heating appliance 1, the frozen lean bread 10 needs to be thawed and secondary-baked as needed.

In the first embodiment, the baked lean bread 10 is transferred into the cooling chamber which has a temperature (35 to 45°C) higher than a room temperature while the core temperature of the baked lean bread is still between 90 to 95°C. As a temperature difference between a temperature inside the heating appliance 1 and a room temperature is so large that the moisture evaporates significantly from the lean bread. Therefore, the lean bread 10 is transferred into the cooling chamber 2 of higher temperature while the core temperature thereof is still high, so as to minimize an impact of this sudden temperature drop and suppress the moisture evaporation, thereby preventing the flaking of the surface layer of the lean bread.

### [Second Embodiment]

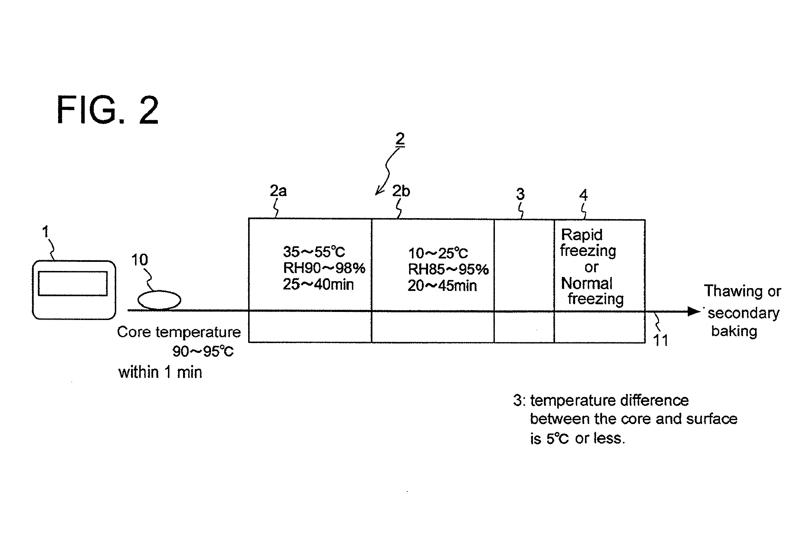

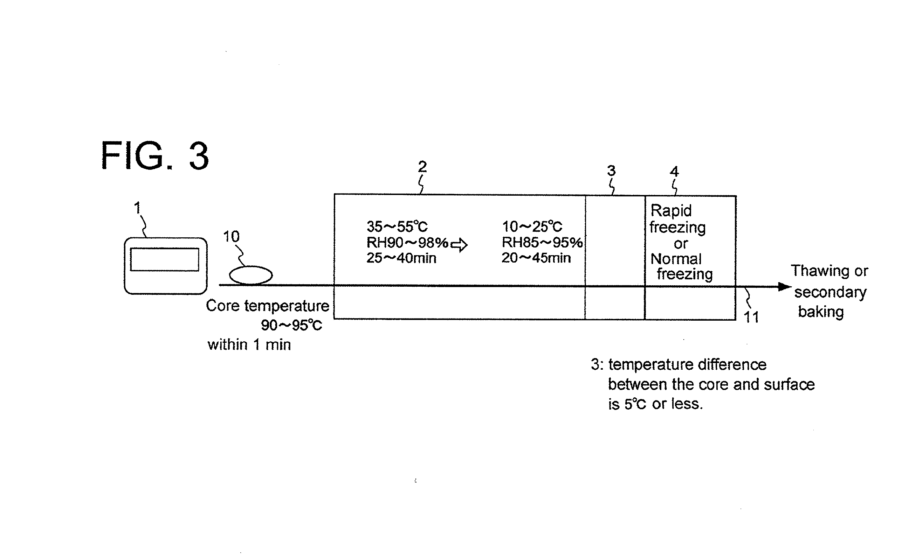

A second embodiment will be explained in reference to FIG. 2 and FIG.3. The structures that are similar to those in the first embodiment will not be explained herein.

In the second embodiment, the lean bread 10 out of the heating appliance 1 is transferred into the cooling chamber 2 while the core temperature thereof is between 90 to 95°C in a similar manner as the first embodiment.

Moreover, the unique construction of the second embodiment is that the cooling chamber has two cooling rooms to perform the cooling step gradually. FIG.2 illustrates an example of the cooling chamber 2 with two cooling rooms. The cooling chamber 2 is divided into an upstream cooling room 2a and a downstream cooling room 2b.

The upstream cooling room 2a is sustained in an atmosphere of 35 to 55°C and 95 to 98%RH, preferably 45 to 55°C and 95 to 98%RH. The lean bread 10 stays in the upstream cooling room 2a preferably for 20 to 45 minutes.

The downstream room 2b is sustained in an atmosphere of 10 to 25°C and 85 to 95%RH, preferably 15 to 25°C and 85 to 90%RH. The lean bread 10 stays in the downstream cooling room 2b preferably for 25 to 40 minutes.

As another example illustrated in FIG.3, the cooling chamber 2 is constituted of one space, and when the lean bread 10 is transferred into the cooling chamber 2, the cooling chamber 2 is set in a first atmosphere of 35 to 55°C and 90 to 98%RH, preferably 45 to 55°C and 95 to 98%RH, and then changed to a second atmosphere of 10 to 25°C and 85 to 95%RH, preferably 15 to 25°C and 85 to 90%RH. Preferably, the lean bread 10 is subjected to the first atmosphere for 20 to 45 minutes and then to the second atmosphere for 25 to 40 minutes.

According to the second embodiment of the present invention, in a similar manner as the first embodiment, the lean bread with a high temperature is cooled gradually without changing the temperature drastically, and the moisture evaporation can be suppressed thereby preventing dryness of the bread, and the flaking of the surface layer of the bread can be prevented. Furthermore, in the second embodiment, the lean bread is cooled gradually so as to further minimize the sudden temperature drop and improve the quality of the bread surface.

Moreover, by dividing the cooling chamber 2 into two cooling rooms and cooling the lean bread while transferring the lean bread as shown in FIG.2, the cooling step can be continuously performed and a large amount of products can be processed.

By performing the cooling of the lean bread in two different atmospheres in the cooling chamber 2 having a single room, the lean bread can still be cooled gradually in the cooling chamber whose atmosphere is changed in a manner described above. As a result, the cooling chamber can be downsized.

### [Third Embodiment]

Next, the experimental results of the flaking of the lean bread which has been cooled in accordance with the first embodiment and the second embodiment will be explained. The experimental results in the case of humidifying and cooling the lean bread in accordance with the first and second embodiments are shown as Embodiment 1-1 to 2-5 while the results in the case of humidifying and cooling the lean bread under other conditions are shown as Comparison 1-1 to 3-3.

In this experiment, a lean bread of a baguette type with a long and skinny shape was used. The lean bread is made by mixing flour, yeast, salt and water, raising the dough, conducting a primary baking, cooling the primary-baked bread under the humidifying and cooling conditions indicated in the table, and freezing the cooled bread. The frozen bread is baked finally in an oven made for a store, and the final-baked bread is used to evaluate the results.

Herein, the flaking rate is a weight percentage when making a lengthwise cut in the lean bread with a knife.

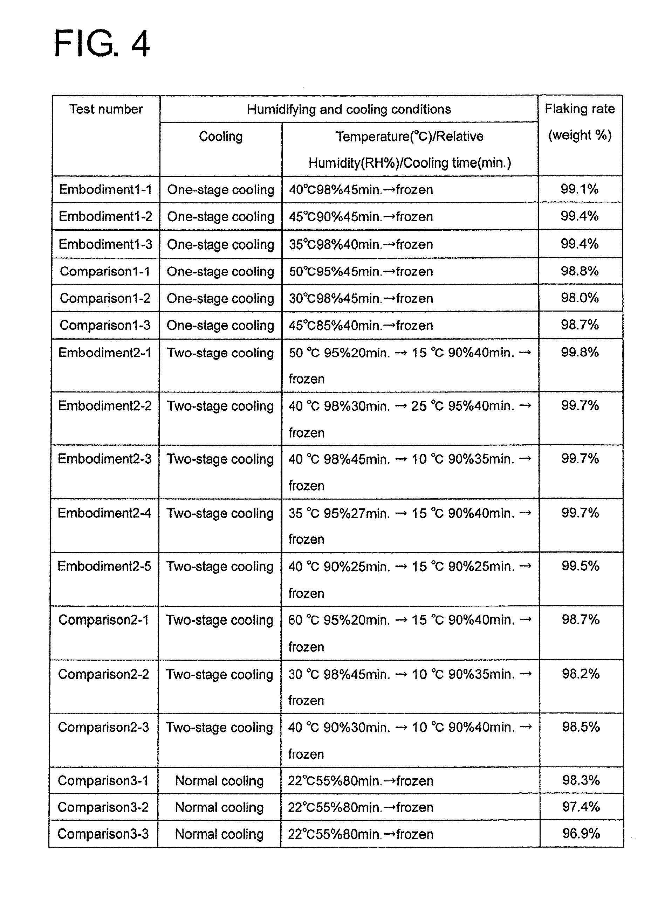

FIG.4 is a table showing a flaking rate of the lean bread after secondary baking. Embodiment 1-1 to 1-3 are the cases in which the lean bread was cooled in one cooling atmosphere in accordance with the first embodiment. Comparison 1-1 to 1-3 are the cases in which the lean bread was cooled in one cooling atmosphere of different temperature and humidity. Embodiment 2-1 to 2-5 are the case in which the lean bread was cooled in two atmospheres in accordance with the second embodiment of the present invention. Comparison 2-1 to 2-3 are the cases in which the lean bread was cooled in two cooling atmospheres of different temperature and humidity. Comparison 3-1 to 3-3 are the cases when the lean bread was cooled at a room temperature.

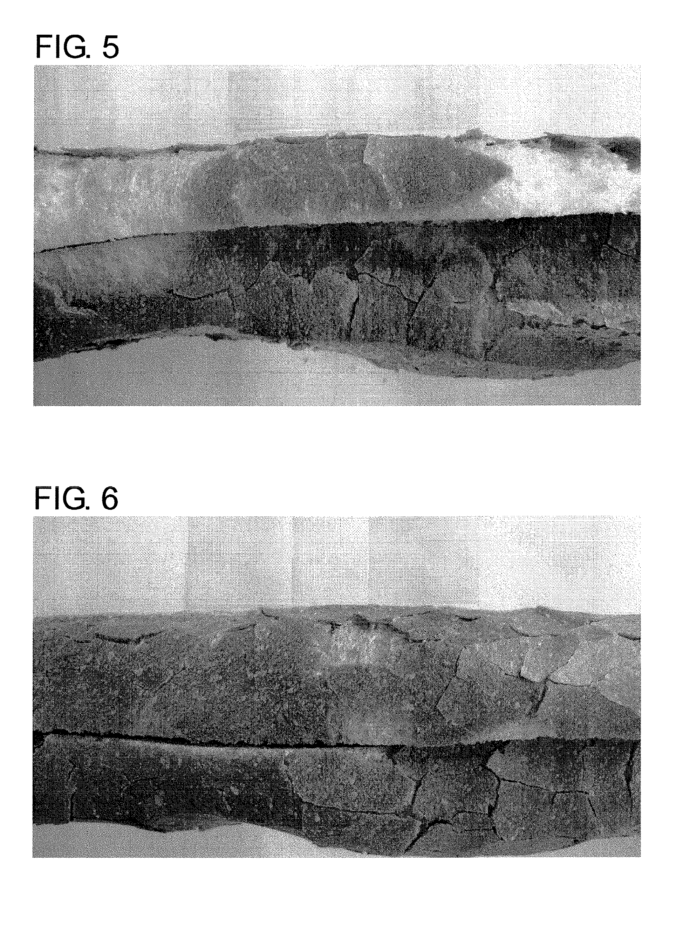

In Embodiment 1-1 to 1-3, the weight ratio is high as 99.1% and above. Specifically, with the humidifying and cooling conditions of the first embodiment, the lean bread maintains an excellent condition of the surface layer after being frozen and reheated. The condition of the surface layer is not prone to the flaking even when being processed. The condition of the lean bread obtained in Embodiment 1-1 is shown in FIG.5. This is a picture of the bread which was cooled and frozen under the condition of Embodiment 1-1, being secondary-baked and being cut with a knife. As obvious from the picture, the flaking of the surface layer is very little.

On the other hand, in Comparison 1-1, the lean bread was cooled at a high temperature of 50°C for 45 minutes and thus when the lean bread leaches the temperature limit in the cooling atmosphere, the moisture evaporation within the bread becomes significant due to the high temperature, which leads to further dryness and a high flaking rate.

In Comparison 1-2, the lean bread is cooled at 30oC for 45 minutes. The lean bread was not sufficiently cooled to the temperature appropriate for the subsequent freezing step, which leads to a high flaking rate.

In Comparison 1-3, the lean bread was cooled at 45°C and 85%RH. The humidity is so low that it leads to moisture evaporation in the cooling step and a high flaking rate.

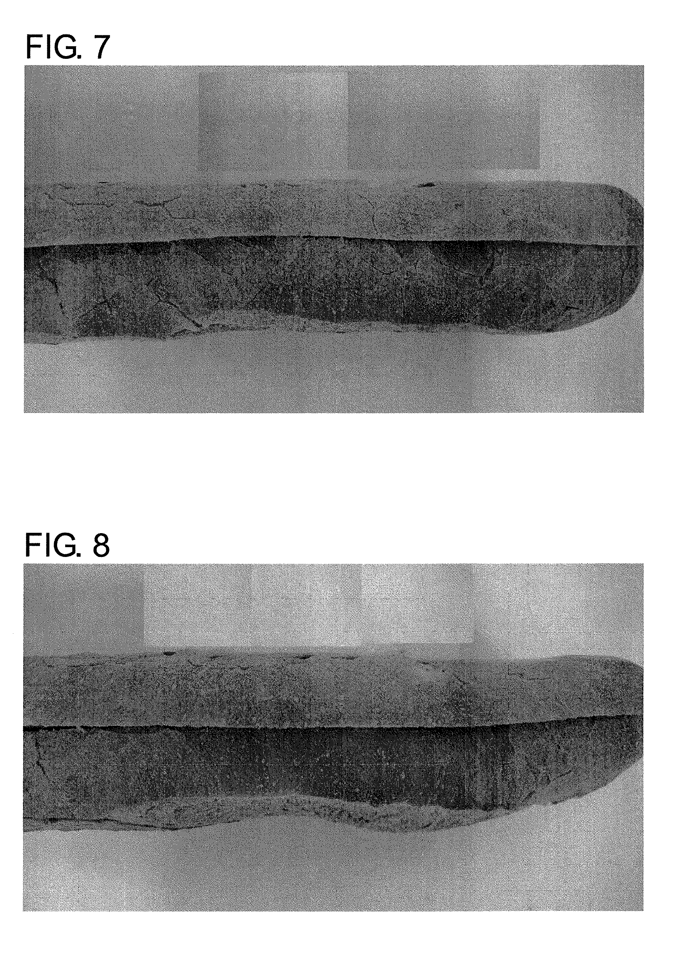

In any case of Embodiment 2-1 to 2-5, the weight ratio was as high as 99.5 and above. Specifically, with the humidifying and cooling conditions of the second embodiment, the lean bread maintains an excellent condition of the surface layer after being frozen and reheated. The condition of the surface layer is not prone to the flaking when being cooked. Furthermore, Embodiment 2-1 to 2-5 show better results than Embodiment 1-1 to 1-3. The condition of the lean bread obtained in Embodiment 2-1 is shown in FIG.6 and the condition of the lean bread obtained in Embodiment 2-2 is shown in FIG.7. Both of the pictures were taken in the same condition as the picture of FIG.5. As evident from the pictures, the flaking of the surface layer is extremely little and the surface condition of the bread is excellent.

On the other hand, in Comparison 2-1, the lean bread was cooled at a high temperature of 60°C in the first cooling atmosphere and thus the temperature difference between the first and the second atmospheres causes the moisture evaporation within the bread becomes significant due to the high temperature and the flaking rate becomes high.

In Comparison 2-2, the lean bread was cooled at a low temperature of 30°C in the first cooling atmosphere and thus the temperature difference between the hot lean bread right after being baked and the first cooling atmosphere is so vast that more moisture evaporates from inside of the bread and the flaking rate becomes high.

In Comparison 2-3, the lean bread was cooled at 90%RH in the first cooling atmosphere which is lower than the humidity of the second embodiment. In this comparison example, as the humidity is so low that more moisture evaporates from inside of the bread and the flaking rate becomes high.

In Comparison 3-1 to 3-3, the lean bread was cooled in a normal cooling atmosphere of 22°C and 55%RH for 80 minutes. The weight ratio is so low as 98% or below.

The condition of the lean bread obtained in Comparison 3-1 is shown in FIG. 7. The picture was taken in the same condition as FIG.5. As evident from the picture, the flaking on the surface layer of the lean bread is significant and an appearance of the bread is very poor. Thus, the normal cooling condition is not appropriate for cooling the lean bread.

### Industrial Applicability

According to the present invention, the method and apparatus of cooling the lean bread low in fat, is capable of minimizing the moisture evaporation in the cooling step, maintaining the good condition of the surface layer, and avoiding the flaking of the surface layer.

## Claims

1. A method of cooling lean bread which has been baked or half-baked, prior to freezing the lean bread, comprising:
a humidifying and cooling step of humidifying and cooling the baked or half-baked lean bread in an atmosphere of 35 to 45°C and 90 to 98%RH wherein a core temperature of the baked or half-baked lean bread immediately before the humidifying and cooling step is in a range of 90 to 95°C.

2. The method of cooling the lean bread according to claim 1, wherein the lean bread is subjected to the atmosphere for 30 to 45 minutes.

3. A method of cooling lean bread which has been baked or half-baked, prior to freezing the lean bread, comprising:
a humidifying and cooling step of humidifying and cooling the baked or half-baked lean bread,
wherein the humidifying and cooling step includes substeps of:
cooling the lean bread in an first atmosphere of 35 to 55°C and 90 to 98%RH; and
cooling the lean bread in an second atmosphere of 10 to 25°C and 85 to 95%RH,
wherein a core temperature of the baked or half-baked lean bread immediately before the humidifying and cooling step is in a range of 90 to 95°C.

4. The method of cooling the lean bread according to claim 3, wherein in the humidifying and cooling step, the lean bread is subjected to the first atmosphere for 20 to 45 minutes and to the second atmosphere for 25 to 40 minutes.

5. The method of cooling the lean bread according to claim 1 or 3, wherein the humidifying and cooling step is terminated when a temperature difference between a core and a surface of the lean bread becomes 5°C or smaller.

6. An apparatus of cooling lean bread which has been baked, prior to freezing the lean bread, comprising:
a cooling chamber which the lean bread is brought in, the cooling chamber being sustained in an atmosphere of 35 to 45°C and 90 to 98%RH,
wherein a core temperature of the baked or half-baked lean bread immediately before entering the cooling chamber is in a range of 90 to 95°C.

7. An apparatus of cooling lean bread which has been baked or half-baked, prior to freezing the lean bread, comprising:
a cooling chamber which the lean bread is brought in, the cooling chamber,
wherein the cooling chamber includes a temperature/humidifying regulator which keeps an atmosphere inside the cooling chamber at a temperature of 35 to 55°C and a humidity of 90 to 98%RH and then keeps the atmosphere inside the cooling chamber at a temperature of 10 to 25°C and a humidity of 85 to 95%RH, and
wherein a core temperature of the baked or half-baked lean bread immediately before entering the cooling chamber is in a range of 90 to 95°C.

8. An apparatus of cooling lean bread which has been baked or half-baked, comprising:
a conveyor which transfers the lean bread in a transferring direction; and
a cooling chamber which includes an upstream room and a downstream room arranged in the transferring direction, the lean bread being transferred by the conveyor so as to pass through the upstream and downstream rooms successively,
wherein the upstream cooling room of the cooling chamber is sustained in an atmosphere of 35 to 55°C and 90 to 98%RH and the downstream room of the cooling chamber is sustained in an atmosphere of 10 to 25°C and 85 to 95%RH, and
wherein a core temperature of the baked or half-baked lean bread immediately before entering the cooling chamber is in a range of 90 to 95°C.
